# EUROPEAN PATENT APPLICATION

(11) **EP 4 597 928 A1**
(43) Date of publication of application: **06.08.2025**
(21) Application number: 23767969.1
(22) Date of filing: 09.08.2023
(51) Int. Cl.: H04L 9/40, H04L 9/32, H04L 12/40, H04L 67/12

(54) **FUNCTION MANAGEMENT SYSTEM AND FUNCTION MANAGEMENT METHOD**

(30) Priority: 26.09.2022 JP 2022152932
(71) Applicant: Robert Bosch GmbH, 70442 Stuttgart (DE)
(72) Inventor: SHU, Absalom, Yokohama-shi, Kanagawa 224-8501 (JP)
(74) Representative: Isarpatent
(86) International application number: PCT/IB2023/058031
(87) International publication number: WO 2024/069264

(57) **Abstract**

To provide a function management system and a function management method that are highly convenient for users while achieving highly secure authentication.

A function management system (1) according to the invention includes: a management section (60) having a message generation section (62) that generates a message for enabling or disabling a function of an electrical controlling unit (40) forming an in-vehicle network (50) mounted to a vehicle (10) according to an input of a user boarding the vehicle; a processing section (70) that processes the message by using identification information assigned to each function of the electrical controlling unit; and an execution section (80) that changes a function status enabling or disabling execution of the function according to the message processed by the processing section. The management section (60) includes: a reading section (71) that reads the function status of the current function after receiving the message; a determination section (72) that compares a request by the message with the function status and determines whether to enable or disable the function; and a command generation section (73) that generates a command to be transmitted to the execution section according to the determination.

## Description

### Technical Field

The present invention relates to a function management system and a function management method for a vehicle.

### Background Art

Conventionally, there has been known a system in which a server apparatus verifies the validity of each electrical controlling unit by using a common key common to a plurality of electrical controlling units mounted to a vehicle (see PTL 1). In the system described in PTL 1, an electrical controlling unit authenticated by the server apparatus is allowed to update the update firmware, and the like.

### Citation List

### Patent Literature

PTL 1: JP2017-017616A

### Summary of Invention

### Technical Problem

However, in the case of verifying the validity of an electrical controlling unit by using a common key common to a plurality of electrical controlling units as in the system described in PTL 1, when the common key is leaked, it becomes difficult to identify the common key leak source. For this reason, there is a risk of unauthorized access to the server apparatus using the leaked common key.

Therefore, it is an object of the invention to provide a function management system and a function management method that are highly convenient for users while achieving highly secure authentication.

### Solution to Problem

In order to achieve the object, according to an aspect of the invention, there is provided a function management system including: a management section having a message generation section that generates a message for enabling or disabling a function of an electrical controlling unit forming an in-vehicle network mounted to a vehicle according to a user's input; a processing section that processes the message by using identification information assigned to each function of the electrical controlling unit; and an execution section that changes a function status enabling or disabling the function according to the message processed by the processing section. The processing section includes: a reading section that reads the function status of the current function after receiving the message; a determination section that compares a request by the message with the function status and determines whether to change the function status; and a command generation section that generates a command to be transmitted to the execution section according to the determination.

### Advantageous Effects of Invention

According to the invention, it is possible to provide a function management system and a function management method capable of quickly updating the function status while achieving highly secure authentication.

### Brief Description of Drawings

Fig. 1 is a diagram schematically showing an example of the configuration of a function management system according to an embodiment of the invention.
Fig. 2 is a block diagram schematically showing the main configuration of each of a management section, a processing section, and an execution section in Fig. 1.
Fig. 3 is a diagram showing an example of the function status of an electrical controlling unit stored in a storage section of the execution section.
Fig. 4 is a diagram showing an example of identification information assigned to each function of the electrical controlling unit stored in a storage section of the processing section.
Fig. 5 is a sequence diagram showing a first embodiment of authentication processing in a server apparatus, a gateway, and an electrical controlling unit executed by the function management system in Fig. 1.
Fig. 6 is a sequence diagram showing a second embodiment of authentication processing in a server apparatus, a gateway, and an electrical controlling unit executed by the function management system in Fig. 1.
Fig. 7 is a sequence diagram showing a third embodiment of authentication processing in a server apparatus, a gateway, and an electrical controlling unit executed by the function management system in Fig. 1.

### Description of Embodiments

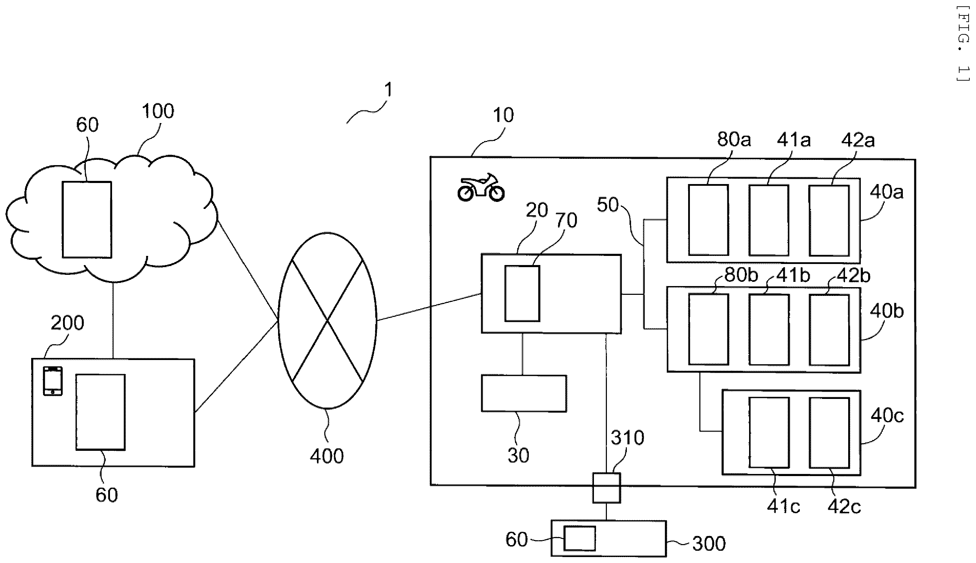

Fig. 1 is a diagram showing a vehicle 10 and a function management system 1 according to one embodiment. In Fig. 1, a straddle-type vehicle (such as a motorcycle) is shown as an example of the vehicle 10. The vehicle 10 includes a gateway 20, a user interface 30, a drive control ECU_A (40a), a brake control ECU_B (40b), a steering control ECU_C (40c), and an in-vehicle network 50. In addition, in the following description, the drive control ECU_A (40a), the brake control ECU_B (40b), and the steering control ECU_C (40c) may be collectively expressed as an electrical controlling unit 40. The gateway 20, the user interface 30, and a plurality of electrical controlling units 40 are connected to the in-vehicle network 50. For example, a CAN is used as the in-vehicle network 50. The CAN is known as one of communication networks mounted to vehicles. The gateway 20, the user interface 30, and each electrical controlling unit 40 can transmit and receive data therebetween through the in-vehicle network 50. The electrical controlling unit 40 transmits and receives data to and from another electrical controlling unit 40 through the in-vehicle network 50.

The electrical controlling unit 40 is an in-vehicle computer provided in the vehicle 10. The electrical controlling unit 40 includes a plurality of ECUs having different functions, such as the drive control ECU_A (40a), the brake control ECU_B (40b), and the steering control ECU_C (40c). In addition, depending on the type of vehicle control function to be executed, one function may be implemented by simultaneously controlling the plurality of electrical controlling units 40. For example, in order to implement an emergency vehicle stop function for stopping the vehicle on the shoulder of the road, it is necessary to simultaneously control the brake control ECU_B (40b) and the steering control ECU_C (40c). In addition, when performing vehicle traction control, the drive control ECU_A (40a) and the brake control ECU_B (40b) may be controlled simultaneously.

The electrical controlling unit 40 includes an execution section 80, a CPU (central processing unit) 41, and a nonvolatile memory 42. In addition, when expressing an execution section, a CPU, and a nonvolatile memory of each of the drive control ECU_A (40a), the brake control ECU_B (40b), and the steering control ECU_C (40c) in the following description, reference numerals a to c in Fig. 1 will be attached for the description. The CPU 41 executes firmware installed in the electrical controlling unit 40. The firmware is a type of software, that is computer program. The nonvolatile memory 42 stores the firmware executed by the electrical controlling unit 40, data, and the like. In addition, the nonvolatile memory 42 stores function status data that enables or disables the execution of each firmware by the CPU. The nonvolatile memory 42 is formed by a ROM (read only memory), a RAM (random access memory), a flash memory, and the like.

The gateway 20 communicates with a server apparatus 100 or a terminal apparatus 200 through a wireless communication network 400 including a public wireless communication network such as the Internet network or a mobile phone network.

In addition, the gateway 20 can transmit and receive data to and from a diagnostic tester 300 through a diagnostic connector 310.

The gateway 20 includes a processing section 70 as a functional configuration. The processing section 70 processes a message transmitted from the server apparatus 100 or the terminal apparatus 200, and generates a command for causing the execution section 80 of the electrical controlling unit 40 to change the function status.

Each of the server apparatus 100, the terminal apparatus 200, and the diagnostic tester 300 includes a management section 60 as a functional configuration to generate a message for enabling or disabling the execution of the function of the electrical controlling unit 40 according to the user's input.

The terminal apparatus 200 is a mobile terminal, such as a smartphone owned by a user, or a computer terminal operated by an operator in a company that manages firmware.

The server apparatus 100 has a function of managing updated firmware and distributing the updated firmware in response to a request from the terminal apparatus 200. The updated firmware may be installed directly from the server apparatus 100 to the electrical controlling unit 40 in response to a command from the terminal apparatus 200, or the updated firmware may be temporarily downloaded from the server apparatus 100 to the terminal apparatus 200 and then installed from the terminal apparatus 200 to the electrical controlling unit 40.

The diagnostic tester 300 is a diagnostic apparatus that can read a defective portion of the firmware of the electrical controlling unit 40 and erase the firmware in the nonvolatile memory or perform a simulation test.

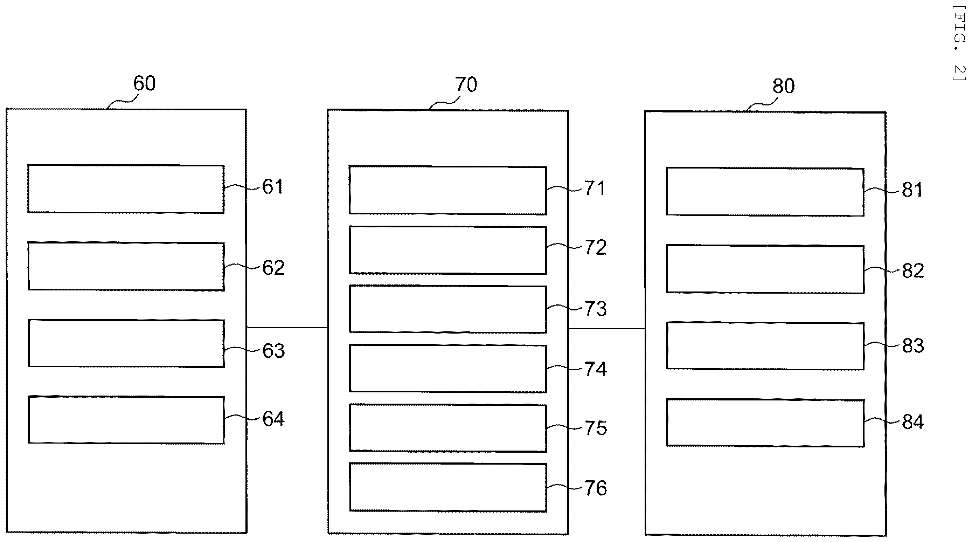

Fig. 2 is a block diagram schematically showing the main configurations of the management section 60, the processing section 70, and the execution section 80.

The management section 60 includes an interface 61, a message generation section 62, an MAC generation section 63, and a storage section 64 as functional configurations. The message generation section 62 forms a data generation section, and the MAC generation section 63 forms a code generation section.

The message generation section 62 generates a message reflecting a request from the user recognized by the interface 61. Specifically, a message for enabling or disabling some of the functions of the electrical controlling unit 40 is generated. The message generated by the message generation section 62 is stored in the storage section 64 together with an effective period (for example, 10 minutes) set in advance.

The MAC generation section 63 encrypts the message generated by the message generation section 62 by using an MAC key (encryption key) stored in the storage section 64, and generates a message authentication code (hereinafter, simply referred to as "MAC") with the message as original data. The MAC generated by the MAC generation section 63 forms an authentication code, and the MAC generation section 63 generates an MAC (authentication code) for transmission to the processing section 70.

The MAC generated by the MAC generation section 63 is generated by using a known MAC algorithm. Known MAC algorithms include a method using a hash function (HMAC) and a method using a block cipher algorithm (OMAC/CMAC, CBC-MAC, PMAC), and the MAC generation section 63 uses these to encrypt data using the MAC key.

The processing section 70 includes a reading section 71, a determination section 72, a command generation section 73, an encryption section 74, an MAC decryption section 75, and a storage section 76 as functional configurations.

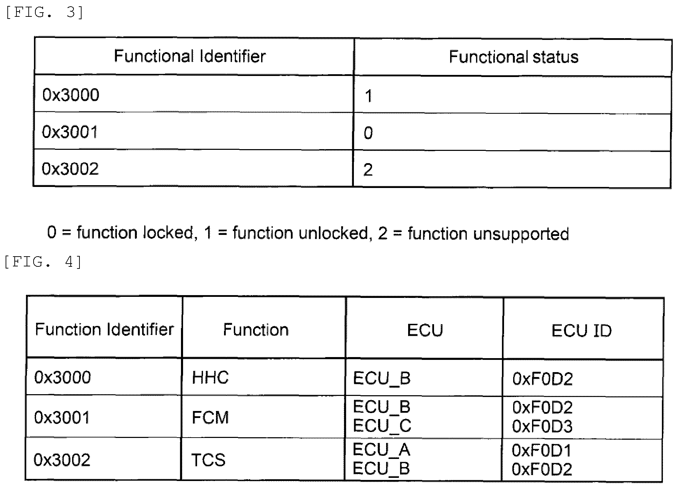

The reading section 71 reads the function status of each function in each electrical controlling unit 40. Specifically, the reading section 71 reads a function status, such as whether the function stored in the electrical controlling unit 40 is enabled or disabled, or whether the function status is prohibited from being changed. Fig. 3 shows an example of the function status read by the reading section 71. In Fig. 3, the function ID "0x3000" indicates that the function is enabled, that is, indicates a status in which the function can be executed by the CPU 41. The function ID "0x3001" indicates that the function is disabled, that is, indicates a status in which the function cannot be executed by the CPU 41. The function ID "0x3002" indicates that the function is not supported, that is, indicates a status in which changing the function status is prohibited.

The determination section 72 compares a function status change request in the message transmitted from the management section 60 with the current function status read by the reading section 71, and determines whether the function status is to be changed according to the message. Specifically, when there is a difference between the request by the message and the current function status and changing the function status is allowed, that is, changing the function status is not prohibited, the determination section 72 determines that the function status is to be changed according to the message.

The command generation section 73 generates a command to be executed by the electrical controlling unit 40 according to the determination of the determination section 72. In Fig. 3, when the function ID "0x3001" is currently disabled (Unlock status = 0) but a command to enable the function ID "0x3001" is generated according to the message, a command is generated to set the function status (unlock status) to "1" for the function ID "0x3001".

When generating a command, identification information stored in the storage section 76 is referred to. Fig. 4 shows an example of identification information. The identification information shown in Fig. 4 includes the correspondence relationship among a function ID (Functional Identifier) for identifying a function, a function name (Function), an electrical controlling unit (ECU) in which the function is stored, and an electrical controlling unit ID (ECU ID) assigned to each of a plurality of electrical controlling units mounted to the vehicle 10. For example, the identification information indicates that the hill hold control function (HHC) is stored in the ECU_B (0xF0D2). In addition, the identification information indicates that the emergency vehicle stop function (FCM) is stored in the ECU_B (0xF0D2) and the ECU_C (0xF0D3) and the traction control function (TCS) is stored in the ECU_A (0xF0D1) and the ECU_B (0xF0D2) . By generating a command with reference to the identification information assigned to each function as described above, the address destination of the command can be specified.

In addition, for command generation, KWP (Keyword Protocol), UDS (Unified Diagnostic Protocol), OBD2 (On-Board Diagnostics), WWH-OBD (World Wide Harmonized-OBD), J1939, and the like, which are standard specifications of diagnostic messages, may be used. In this manner, the types of commands, such as commands for reading data, updating data, and rewriting the function status, can be generated according to standard specifications.

When a function is implemented by a plurality of electrical controlling units 40, the command generation section may generate one command and transmit the command to an execution section in one selected electrical controlling unit. For example, when changing the function status of the emergency vehicle stop function, the command generation section 73 may transmit a command to an execution section 80b of the selected one brake control ECU_B (40b), and the execution section 80b may change the function status in the nonvolatile memory 42b of the brake control ECU_B (40b) and the function status in the nonvolatile memory 42c of the steering control ECU_C (40c).

In another example in which a function is implemented by a plurality of electrical controlling units 40, the command generation section 73 of the processing section 70 generates a command to be executed by each electrical controlling unit 40. For example, when changing the function status of the traction control function, the command generation section 73 of the processing section 70 generates a command to be executed by an execution section 80a of the drive control ECU_A (40a) and a command to be executed by the execution section 80b of the brake control ECU_B (40b).

The encryption section 74 encrypts the command generated by the command generation section 73 by using a key stored in the storage section 76, thereby generating a key. The key generated by the encryption section 74 is generated by using a known common key encryption method (AES) . The key generated by the encryption section 74 is stored in the storage section 76 together with an effective period (for example, 10 minutes) set in advance.

As an encryption method, a public key encryption method may be used other than the common key encryption method. In this example, however, it is desirable to use a common key encryption method with a faster processing time. Since commands are transmitted and received within the in-vehicle network, the risk of the common key leaking to the outside is low. Therefore, safe and fast processing becomes possible by adopting the common key encryption method.

The MAC decryption section 75 decrypts the message transmitted from the management section 60 by using the MAC key stored in the storage section 76 to restore the original data before encryption from the MAC. That is, the MAC decryption section 75 decrypts the MAC to restore the original data message. The MAC decryption section 75 decrypts the MAC by using the same MAC algorithm encryption method as in the management section 60. Therefore, in the management section 60 and the processing section 70, MAC algorithm schemes used for encryption and decryption are set in advance. Decrypting the MAC makes it possible for the determination section 72 to make a determination.

Next, the execution section 80 will be described.

The execution section 80 includes a decryption section 81, an authentication section 82, an output section 83, and a storage section 84 as functional configurations.

The decryption section 81 decrypts the encrypted command transmitted from the processing section 70 by using the key stored in the storage section 84. The decryption section 81 decrypts the command by using the common key that is used by the encryption section 74 and stored in the storage section 84.

The authentication section 82 authenticates the processing section 70 when it is determined that the transmitted command and the decrypted command match each other. On the other hand, when the authentication section 82 determines that the transmitted command and the decrypted command do not match each other, the authentication section 82 does not authenticate the processing section 70. In this case, the authentication section 82 cuts off the connection with the processing section 70.

When the processing section 70 is authenticated, the storage section 84 stores a command for changing the function status based on the command transmitted from the processing section 70.

The output section 83 overwrites the current function status stored in the nonvolatile memory 42 of the electrical controlling unit 40 according to the command stored in the storage section 84 in the next power cycle of the vehicle 10.

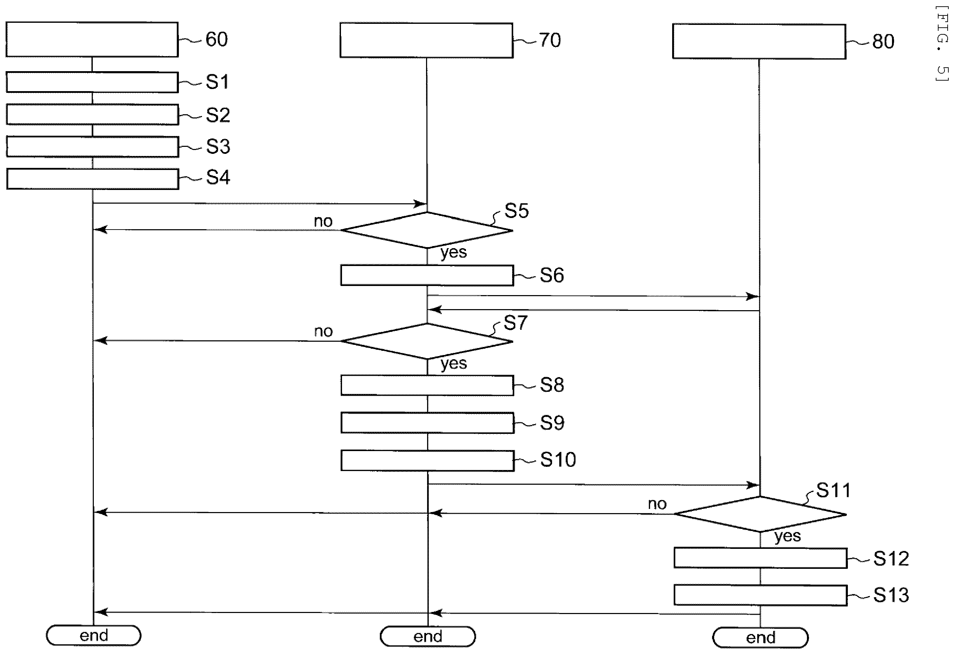

Next, an operation in a first embodiment will be described with reference to Fig. 5. Fig. 5 is a sequence chart of a function management method according to the first embodiment.

(Step S1) A user or the like operates an input section (not shown) of the terminal apparatus 200 or the diagnostic tester 300 to make a request for a change in the function status of the electrical controlling unit 40. Specifically, a request for enabling or disabling a specific function is input through the input section.

(Step S2) The message generation section 62 generates a message for enabling or disabling the function based on the user's input in step S1. The message generated by the message generation section 62 is temporarily stored in the storage section 64 together with an effective period (for example, 10 minutes) set in advance.

(Step S3) The MAC generation section 63 encrypts the message generated by the message generation section 62 by using the MAC key (encryption key) stored in the storage section 64, and generates a message authentication code with the message as original data.

(Step S4) The management section 60 transmits the message encrypted in step S3 to the processing section 70.

(Step S5) For the message received from the management section 60, the MAC decryption section 75 of the processing section 70 decrypts the MAC by using the MAC key stored in the storage section 76. When the MAC cannot be decrypted by using a predetermined algorithm (no), an error message is transmitted to the management section 60, and the process ends.

(Step S6) When the decryption in step S5 is successful (yes), the reading section 71 reads the function status of the target function in the electrical controlling unit 40. The reading section 71 inquires of the electrical controlling unit 40 about the function status of the function, and obtains a response for the current function status from the electrical controlling unit 40.

(Step S7) The determination section 72 compares the message decrypted in step S5 with the current function status obtained from the electrical controlling unit 40 in step S6, and determines whether the function status is to be changed according to the message. At least the following points will be taken into consideration in making the determination:
· Does it correspond to a function whose function status is prohibited from being changed?
· Do the request by the message and the current function status match each other? (that is, is there a difference between the request by the message and the current function status?)

When it is determined that the function status is not to be changed according to the message (no), a message indicating "changed" or "change is not supported" is transmitted to the management section 60, and the process ends.

(Step S8) When the determination section 72 determines that the function status is to be changed according to the message in step S7 (yes), the command generation section 73 generates a command for changing the function status. Identification information is referred to when generating a command.

(Step S9) The encryption section 74 encrypts the command generated by the command generation section 73 by using the common key stored in the storage section 76, thereby generating a key. The key generated by the encryption section 74 is generated by using a known common key encryption method (AES). The key generated by the encryption section 74 is stored in the storage section 76 together with an effective period (for example, 10 minutes) set in advance.

(Step S10) The processing section 70 transmits the command encrypted in step S9 to the execution section 80.

(Step S11) The execution section 80 decrypts the electronic signature of the encrypted command, which has been received from the processing section 70, by using the common key of the electrical controlling unit 40. The common key of the electrical controlling unit 40 is stored in the storage section 84 in advance. The decrypted command is temporarily stored in the storage section 84 before overwriting the function status of the electrical controlling unit 40 based on the command. When the decryption is not possible with the common key (no), the processing section 70 is not authenticated and the connection with the processing section 70 is cut off.

(Step S12) In the next power cycle of the vehicle 10 (that is, ON/OFF of the power of the vehicle or ON/OFF of the ignition), the execution section 80 updates the function status of the function status management data stored in the nonvolatile memory 42 of the electrical controlling unit 40 based on the command stored in the storage section 84. The update may be performed only when the vehicle is stopped or parked. The vehicle stop status or the vehicle parking status can be determined, for example, by evaluating the signal of a vehicle speed sensor. Or, when the vehicle is a straddle-type vehicle, the vehicle stop status or the vehicle parking status can be determined by evaluating the signal of a sensor that detects the state of the stand used when parking the straddle-type vehicle.

(Step S13) When the execution of the function status update processing is completed, the execution section 80 transmits an update completion notification to the processing section 70. When the update completion notification is received from the execution section 80, the processing section 70 transmits the update completion notification regarding the function status of the electrical controlling unit 40 to the management section 60. Therefore, the user can check that the function status has been updated.

In addition, the update completion notification in step S13 may or may not be executed. In addition, the update completion notification may be transmitted from the processing section 70 to the user interface 30.

According to the first embodiment, the processing section of the gateway decrypts the electronic signature of the message with the MAC received from the server apparatus or the terminal apparatus. Then, the processing section compares the message whose electronic signature has been successfully decrypted with the current function status of the electrical controlling unit, and applies an electronic signature using the common key of the electrical controlling unit when it is determined that the function status is to be changed. Then, the processing section transmits a command with an electronic signature using the common key of the electrical controlling unit to the execution section of the electrical controlling unit. The execution section verifies the digitally signed command, which has been received from the processing section, with its own common key. The electrical controlling unit changes the function status by using only a command for which the electronic signature has been successfully verified.

Therefore, in the transmission and reception of messages in wireless communication between the terminal apparatus or the like and the gateway, messages with MACs are transmitted and received, so that access from others due to spoofing or the like can be blocked. On the other hand, since transmission and reception between the gateway and the electrical controlling unit are performed within a closed circuit in the in-vehicle network, it is possible to perform data transmission and reception satisfying both security and high process speed by using a common key.

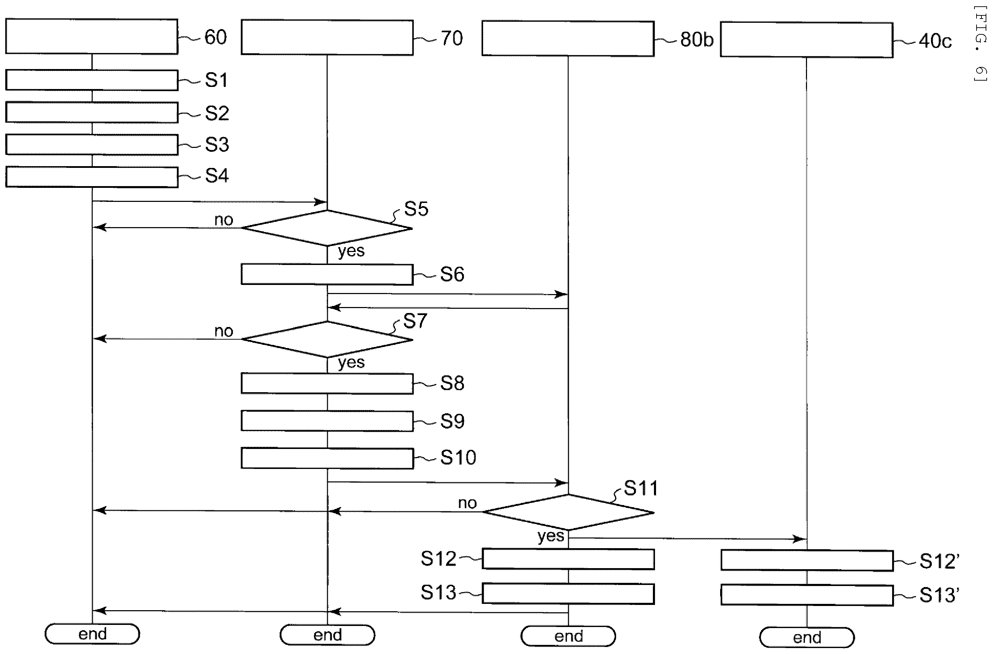

Next, an operation in a second embodiment in which a function is executed by using at least two electrical controlling units will be described with reference to Fig. 6. Fig. 6 is a sequence chart of a function management method according to the second embodiment.

In addition, since steps S1 to S9 are the same as those in the first embodiment, step S10 and subsequent steps in the second embodiment will be described below.

(Step S10) The processing section 70 transmits the command encrypted in step S9 to one electrical controlling unit selected to execute the target function. In the second embodiment, the command is transmitted to the execution section 80b of the ECU_B (40b) selected to execute the function.

(Step S11) The execution section 80b of the selected ECU_B (40b) decrypts the electronic signature of the encrypted command, which has been received from the processing section 70, by using the common key of the electrical controlling unit 40. The common key of the electrical controlling unit 40 is stored in the storage section 84 in advance. The decrypted command is temporarily stored in the storage section 84 of the execution section before overwriting the function status of the electrical controlling unit 40 based on the command. When the execution section 80b cannot decrypt the electronic signature of the encrypted command with the common key (no), the processing section 70 is not authenticated and the connection with the processing section 70 is cut off.

(Steps S12 and S12') In the next power cycle of the vehicle 10, the execution section 80b updates the function status of the function status management data stored in the nonvolatile memories 42b and 42c of the ECU_B (40b) and the ECU_C (40c) based on the command stored in the storage section 84. Here, since the command received from the processing section 70 is generated with reference to the identification information, the execution section 80b can simultaneously perform the update of the function status executed by the ECU_B (40b) and the update of the function status executed by the ECU_C (40c).

As in the case of the first embodiment, the update may be performed only when the vehicle is stopped or parked.

(Step S13) When the execution of the function status update processing is completed, the execution section 80b transmits an update completion notification to the processing section 70. When the update completion notification is received from the execution section 80b, the processing section 70 transmits the update completion notification regarding the function statuses of the ECU_B (40b) and the ECU_C (40c) to the management section 60. Therefore, the user can check that the function status has been updated.

According to the second embodiment, the execution section in one selected electrical controlling unit changes not only the function status in its own electrical controlling unit but also the function status in other electrical controlling units. In addition, when the processing section is not authenticated by the one selected execution section, the communication with the processing section is cut off.

As a result, it is possible to quickly and safely change the function status when the function is executed by a plurality of electrical controlling units.

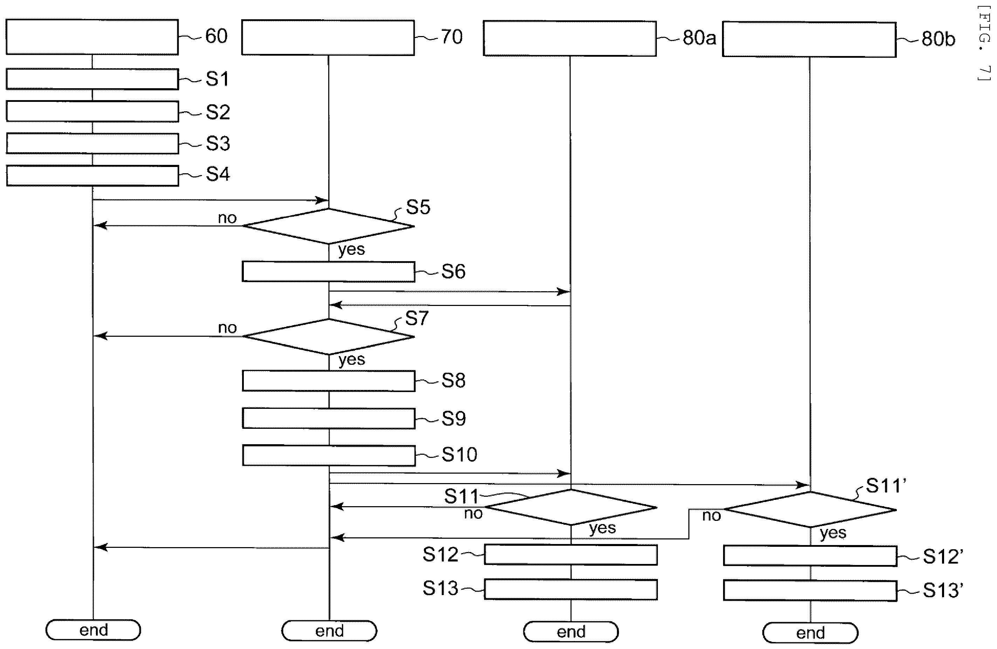

Next, an operation in a third embodiment in which a function is executed by using at least two electrical controlling units will be described with reference to Fig. 7. Fig. 7 is a sequence chart of a function management method according to the third embodiment.

In addition, since steps S1 to S7 are the same as those in the first embodiment, step S8 and subsequent steps in the third embodiment will be described below.

(Step S8) When the determination section 72 determines that the function status is to be changed according to the message in step S7, the command generation section 73 generates a command for changing the function status. In the third embodiment, since the target function is executed by two electrical controlling units, the command generation section 73 generates a command for the execution section 80a of the ECU_A (40a) and a command for the execution section 80b of the ECU_B (40b) separately. Since the identification information includes the ECU used for each function ID and the correspondence relationship between functions in the ECU, the command generation section 73 can generate an individual command for each electrical controlling unit with reference to the identification information.

(Step S9) The encryption section 74 encrypts the two commands generated by the command generation section 73 by using the common key stored in the storage section 76, thereby generating a key. The key generated by the encryption section 74 is generated by using a known common key encryption method (AES). The key generated by the encryption section 74 is stored in the storage section 76 together with an effective period (for example, 10 minutes) set in advance.

(Step S10) The processing section 70 transmits the commands encrypted in step S9 to the execution section 80a of the ECU_A (40a) and the execution section 80b of the ECU_B (40b), respectively.

(Steps S11 and S11') The execution sections 80a and 80b decrypts the electronic signatures of the encrypted commands, which have been received from the processing section 70, by using the common key of the electrical controlling unit 40. The common key of the electrical controlling unit 40 is stored in the storage section 84 in advance. The decrypted commands are temporarily stored in the storage sections of the execution sections 80a and 80b before overwriting the function statuses of the ECU_A (40a) and the ECU_B (40b) based on the commands. When any of the execution sections 80a and 80b of the ECU_A (40a) and the ECU_B (40b) cannot decrypt the electronic signatures of the encrypted commands with the common key, the processing section 70 is not authenticated and the connection with the processing section 70 is cut off.

(Steps S12 and S12') In the next power cycle of the vehicle 10, the execution sections 80a and 80b updates the function status of the function status management data stored in the nonvolatile memories 42a and 42b of the ECU_A (40a) and the ECU_B (40b) based on the commands stored in the storage sections of the execution sections 80a and 80b. When updating, overwriting may be performed only when the vehicle is stopped.

(Steps S13 and S13') When the execution of the function status update processing is completed, each of the execution sections 80a and 80b transmits an update completion notification to the processing section 70. When the update completion notification is received from each of the execution sections 80a and 80b, the processing section 70 transmits the update completion notification regarding the function status of the electrical controlling unit 40 to the management section 60. Therefore, the user can check that the function status has been updated.

According to the third embodiment, the command generation section generates an individual command for each electrical controlling unit.

Therefore, the execution of a command when a function is executed by a plurality of electrical controlling units can be completed within each electrical controlling unit. As a result, it is possible to further improve the security.

### Reference Signs List

1: Function management system
10: Vehicle
20: Gateway
30: User interface
40: Electrical controlling unit
41: CPU
42: Nonvolatile memory
50: In-vehicle network
60: Management section
62: Message generation section
63: MAC generation section
64: Storage section
70: Processing section
71: Reading section
72: Determination section
73: Command generation section
74: Encryption section
75: MAC decryption section
76: Storage section
80: Execution section
81: Decryption section
82: Authentication section
83: Output section
84: Storage section
100: Server apparatus
200: Terminal apparatus
300: Diagnostic tester
310: Diagnostic connector
400: Wireless communication network

## Claims

1. A function management system (1), comprising:
a management section (60) having a message generation section (62) that generates a message for enabling or disabling a function of an electrical controlling unit (40) forming an in-vehicle network mounted to a vehicle according to a user's input;
a processing section (70) that processes the message by using identification information assigned to each function of the electrical controlling unit; and
an execution section (80) that changes a function status enabling or disabling execution of the function according to the message processed by the processing section,
wherein the processing section includes:
a reading section (71) that reads the function status after receiving the message;
a determination section (72) that compares a request by the message with the function status and determines whether to change the function status; and
a command generation section (73) that generates a command to be transmitted to the execution section according to the determination.

2. The function management system according to claim 1,
wherein the processing section includes an MAC decryption section (75) that decrypts the message to which a message authentication code has been applied by using an MAC key.

3. The function management system according to claim 1,
wherein the processing section includes an encryption section (74) that encrypts the command by using a common key.

4. The function management system according to claim 1,
wherein the execution section changes the function status of the electrical controlling unit after checking that the vehicle has been stopped or parked.

5. The function management system according to claim 1,
wherein, when the function is implemented by a plurality of the electrical controlling units, the execution section in a selected one of the electrical controlling units changes the function status in each of the electrical controlling units.

6. The function management system according to claim 1,
wherein, when the function is implemented by a plurality of the electrical controlling units, the command generation section generates the individual command for each of the electrical controlling units.

7. The function management system according to claim 1,
wherein the vehicle is a straddle-type vehicle (10).

8. A function management method for managing a function status of a function of an electrical controlling unit forming an in-vehicle network mounted to a vehicle, the method comprising:
a message generation step for generating a message for enabling or disabling execution of the function according to a user's input;
a reading step for reading the current function status after the message generation step;
a determination step for comparing a request by the message with the function status and determining whether to enable or disable the function; and
a command generation step for generating a command for changing the function status according to the determination.
